# EUROPEAN PATENT SPECIFICATION

(11) **EP 2 308 662 B1**
(45) Date of publication and mention of the grant of the patent: **22.08.2012**
(21) Application number: 10186920.4
(22) Date of filing: 07.10.2010
(51) Int. Cl.: B29C 33/00, B29C 35/00

(54) **Heating unit for heating press plates of vulcanizing press machine and method for heating press plates of vulcanizing press machine**
Heizgerät zum Erhitzen von Druckplatten einer Vulkanisierpressmaschine und Verfahren zum Erhitzen von Pressplatten einer Vulkanisierpressmaschine
Unité de chauffage pour plaques de presse chauffantes d'une machine de presse de vulcanisation pour plaques de presse chauffantes de machine de presse de vulcanisation

(30) Priority: 09.10.2009 PL 38923509
(43) Date of publication of application: 13.04.2011
(73) Proprietor: Linter Spolka z ograniczona odpowiedzialnoscia, 32-340 Wolbrom (PL)
(72) Inventor: Marciniak, Zbyszek, 97-300 Piotrkow Trybunalski (PL)
(74) Representative: Hudy, Ludwik

(56) References cited:
- EP-A1- 0 253 001
- CN-Y- 201 012 528
- GB-A- 1 587 976
- GB-A- 2 321 959
- US-A- 3 578 066
- US-A- 4 278 230
- US-A- 5 182 117

## Description

The present invention relates to a heating unit for heating press plates of a vulcanizing press machine and to a method for heating such plates, especially those mounted in the vulcanizing press machine applied to vulcanize belts of belt conveyors.

The most known vulcanization method used to vulcanize objects, in particular those made of rubber, consists in placing an object to be vulcanized between the elements and in pressing these elements to each other whereas at least one of these pressing elements is heated. The result of heating and pressing is that the objects being vulcanized are bonded together during the vulcanization process. Referring to a vulcanizing press machine, the elements being pressed are plates heated using a medium, for example a heating fluid flowing through the ducts within the press plates. During the ongoing vulcanization process, the heating fluid is heated in a heating system located outside of the heating press plates and pumped into the ducts in the heating press plates of the vulcanizing press machine. Usually, the temperature of heating press plates during vulcanization is kept at a constant level determined by the requirements of a given technological process and by the parameters of a given object being vulcanized. During the initial phase of heating press plates, which are still cold, the heating fluid or any other heating medium, for example air, is intensely heated, and, after the vulcanization process is completed, this medium is, most usually, cooled.

The commonly known heating system used to heat press plates of a vulcanizing press machine, comprises a tank with a heating fluid, elements to heat the heating fluid, a pump forcing the heating medium to flow through, and hydraulic pipes connecting the tank, pump, and heating press plates. Additionally, the heating system can be equipped with a heating fluid temperature controller that, indirectly, controls also the temperature of heating press plates.

The heating system as indicated above is known from the patent specification no. PL146076, and its key subunits are mounted on a mobile trolley. In particular, the heating unit with the tank for heating fluid and with electric heater is placed on the mobile trolley, as are a suction and force pump, fluid feeding lines, and fluid return lines. The heating unit is equipped with a distribution valve, check valves and overflow valves, and manometers and thermometers connected to the electric control system.

In this solution, a problem is the long time necessary to heat the heating medium because it is necessary to heat the whole volume of this medium in the tank.

Another heating system is known from the publication of the patent application no. P-384421 entitled "A method to heat vulcanizing press machine using a liquid medium and a heating system for the vulcanizing press machine". The heating system described in this patent application is equipped with heating press plates heated by liquid medium pumped by a pump from the tank. It is equipped with a throttle within the heating medium flow route from the tank to the heating press plate, whereas the best location for the throttle would be at the inlet into the heating press plate and it is connected with the pressure feeding line. The liquid medium is cooled in a cooler located within the route the liquid medium flows down from the heating press plate into the tank.

The method of heating the press plates of the vulcanizing press machine as presented in the above cited publication consists in heating the heating medium, in particular a hydraulic oil of a viscosity ranging from 32 to 66 cSt, supplied by a highpressure feeding line, during its flow through a reducing pipe. During the first phase of heating the heating press plates, the hydraulic oil is supplied to the reducing pipe with a constant discharge of 25 l/min at a pressure of 160 bar. While the hydraulic oil flows through a reducing pipe, heat is emitted and, so, the temperature of the oil increases. The heated oil returns the heat to the heating press plates and, thus, heats them up.

However, this solution has a disadvantage, namely, a problem occurs by seal tightness in a pipe section between a suction and force pump and the reducing pipe, in particular in the connection between the high pressure feeding line and the plate in the case when the reducing pipe is mounted on the heating press plates.

In turn, the publication of patent specification No. US 3578066 A titled "Apparatus for the heating and cooling of moulds for the production of plastic bodies" teaches a moulding apparatus with a combination comprising at least one mould having an outer and an inner wall spaced from each other and defining between the walls a space for the passage of a heat transfer fluid therethrough, fluid circuit means for circulating the fluid through the space and including a feed conduit communicating with said space for feeding fluid thereinto and a return conduit, means in the fluid circuit means for changing the temperature of the fluid passing therethrough, a bypass conduit between the feed conduit and the return conduit and regulating means cooperating with the bypass conduit for regulating the amount of fluid flowing therethrough.

The publication of patent application No. EP 0253001 A1 titled "Method and apparatus for cooling multipart injection moulds" teaches a method for controlling temperature of multipart injection moulds according to which the temperature-control medium is initially taken in through provided temperature-control channels, with the mould closed. This is followed by sucking air through. In this way, the mould parts and also any associated core parts are completely dry after opening the mould and removing the moulding, so that the multipart mould can be put together again and used once more without any further drying operation.

Furthermore, the publication of patent specification No. GB 2321959 A titled "Apparatus for controlling the temperature of a mould" teaches an apparatus for controlling temperature of a mould which has a passage for a heat transfer liquid, usually water. The apparatus comprises a circulation line having a pump for supplying the heat transfer liquid through the passage in the mould, a steam supply tube, a mixer for introducing steam from the steam supply tube directly into the circulation line, and means for detecting the temperature of the liquid in the circulation line and thereby controlling the amount of steam introduced into the circulation line through the steam supply tube.

The idea of the present invention is a heating unit to heat press plates of the vulcanizing press machine. This unit is equipped with heating press plates, which are heated using a liquid medium flowing through inner ducts of the press plates and connected by a feeding line to a pump with a tank and a return line whereas the latter connects the outlets of the plates with the tank. The heating unit according to claim 1 is equipped with a medium flow throttle situated on the liquid medium flow route from the tank to the heating press plate and the liquid medium is heated by heat emitted during flow of the liquid medium forced by the pump through the throttle. This throttle is by its specific shape formed as an overflow valve located at the pump's outlet and connected to at least one heating press plate or to a unit of plates using at least one low-pressure feeding line.

The overflow valve has at least one additional terminal, to which a distribution valve is connected through a control pipe. The distribution valve has three positions: '0', 'a', and 'b'. When the distribution valve is switched on '0', the overflow valve functions as a usual valve with a working pressure set by the valve spring. When the distribution valve is switched on 'a', the overflow valve functions as a valve working at a reduced working pressure preset by the control throttle, and when on 'b', the overflow valve is fully open to allow the overflow and does not throttle the flow.

Preferably, the outlet of the heating press plate or unit of plates is connected to a cooler.

Furthermore, the idea of the invention is a method for heating the plates of the vulcanizing press machine using a liquid medium flowing through the ducts in the plates or in the unit of plates after the said liquid medium has been heated by the heat generated during its pump-forced flow through the throttle. The method of heating according to claim 3 comprises the use of a throttle that is shaped as an overflow valve which is situated at the outlet of the pump. From this pump's outlet, the flow of the liquid medium is directed into the ducts of the heating press plates or of the unit of plates through at least one low-pressure feeding line. The operational level of the overflow valve is set using a distribution valve by switching to one of the three positions: '0', 'a', or 'b'. With the distribution valve switched to '0', the overflow valve is set to operate at a pressure preset by the valve spring. At 'a' the overflow valve operates at a decreased pressure preset by the throttle and at 'b', the overflow valve operates to fully enable the overflow without throttling the flow.

Preferably, the liquid medium is cooled in the cooler after it leaves the plates or outlet of the pump 220 is connected to an overflow valve 230 and this valve 230 is connected, through a low-pressure feeding line, to inner ducts and oil pipes in the membrane-type heating press plate 240 or in the unit of membrane-type heating press plates. Moreover, an overflow valve, specifically a controlled overflow valve 230 has one or two additional terminals or connection pipes. To the first terminal or additional connection pipe, a control pipe 232 is attached in order to connect the overflow valve 230 with the distribution valve 270. To the second terminal or additional connection pipe, an overflow pipe 233 is attached. The distribution valve 270 can additionally cooperate with a control throttle 280.

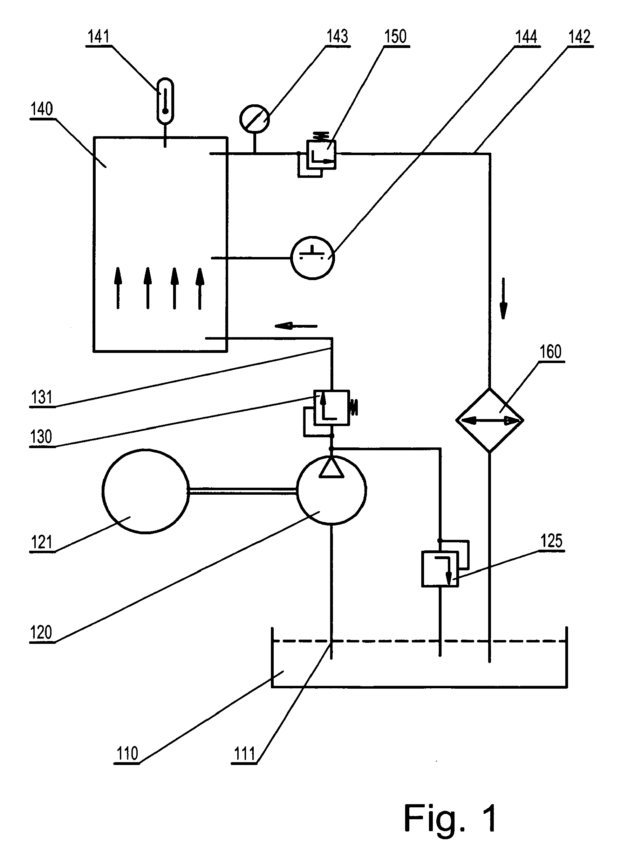

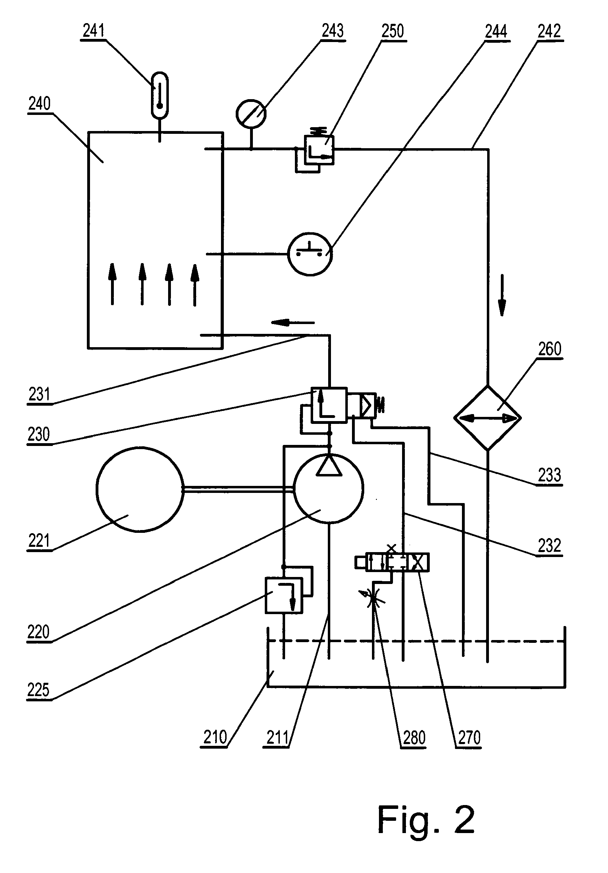

The distribution valve 270 is switchable and may be positioned to at least three positions: '0', 'a', and 'b'. When the distribution valve is switched on '0', the controlled overflow valve 230 operates as a usual valve with a working pressure set by the valve spring. In this position, a moving element of the controlled overflow valve 230, which can be shaped as, for example, a mushroom, ball, or cone, is pressed by a spring to the valve-seat placed inside a duct with flowing medium. As soon as the medium load exceeds the spring-generated pressure value, a gap is formed between the valve-seat and the moving element, and the heating medium flows through this gap. At a non-changing delivery rate of the pump, the flow rate of the medium increases and the medium rubs against the valve-seat walls, heats up, and its temperature increases the more the higher its flow rate is whereas the medium flow rate depends on the size of the gap. In the position 'a' of the distribution valve 270, as shown in Fig. 2, the controlled overflow valve 230 operates at a reduced working pressure preset by the control throttle 280. This is because some part of the heating medium flows through an additional control duct in the controlled overflow valve 230, and, further on, through the control throttle 280 back to the tank 210. In the position 'a', the heat emission from the medium is reduced while this medium flows through the controlled overflow valve 230, and, owing to this, it is possible to control the working temperature of the heating medium. With the distribution valve 270 switched on the position 'b', the controlled overflow valve 230 operates fully opened and allows a free overflow without throttling the flow. Therefore, the heating medium entering the heating press plate or the unit of heating press plates is not heated up, because the medium flow rate does not increase in a narrowed duct in the controlled overflow valve 230. The position 'b' of the control regulator 270 is utilized when activating the pump in a pressure-free manner, and, also, when cooling the performed bonding of the belt. The three positions '0', 'a', and 'b' of the distribution valve make it possible to easily and remotely monitor the operation of the controlled overflow valve 230, thus, to monitor the parameters of the entire heating unit.

A control valve 250 controlling the pressure of the heating medium in the heating press plate 240 or in the unit of heating press plates is attached to the outlet of the ducts in the heating press plate 240 or in the unit of heating press plates shown in Fig. 2. In one of the solutions of the heating unit under this Invention, a cooler 260 can be situated in the return line 242, between the control valve 250 controlling the pressure of the heating medium in the heating press plate 240 or in the unit of heating press plates and the tank 210 with the heating medium. This cooler 260 serves to quickly cool down the heating medium.

Additionally, the heating unit to heat press plates in the vulcanizing press machine under this Invention may be equipped with a thermometer 241 to indicate the temperature of the heating medium in the inner ducts and/or the temperature of the heating press plate 240; with a manometer 243 to indicate the pressure value of the heating medium in the heating press plate 240 or in the unit of heating press plates; and with a temperature sensor 244.

In order to heat the plates of the vulcanizing press machine, a liquid medium is passed through the ducts in it, after it has been heated up using the heat emitted during its flow through the throttle, whereas the throttle is an overflow valve placed in the outlet of the pump. From this point, the liquid medium is directed to the ducts in the plate or in the unit of plates through at least one low-pressure feeding line. The working state of the overflow valve is preset using a distribution valve that can be switched on one of the three positions: '0', 'a', and 'b'. With the distribution valve switched on '0', the overflow valve is set to operate at a pressure value preset by the valve spring; on 'a': at a reduced pressure value preset by the control throttle; and, on 'b', the overflow valve 230 operates to allow the full overflow without throttling the flow of the heating medium.

Contrary to the hitherto known solutions, the solutions as presented under this Invention ensure the relief of the feeding line, i.e. the pipe feeding the heating press plate or the unit of press plates with the heating medium. It is possible owing to the fact that the pressure in the outlet of the overflow valve, to which a feeding line with the heating medium is connected, ranges between 0.6 and 1.2 MPa.

The solution under this Invention has been exemplified by selected embodiments. It is obvious that some modifications could be incorporated without changing the scope of the invention according to the claims.

## Claims

1. A heating unit for heating press plates of a vulcanizing press machine equipped with heating press plates heated using a liquid medium flowing through inner ducts of heating press plates connected by a feeding line to a pump (120) with a tank (110) and by a return line which connects an outlet of the heating press plates to the tank, whereby within the feeding line (131) is situated a throttle through which the liquid medium flows from the tank to the heating press plate and the liquid medium is heated b heat emitted during flow of the liquid medium forced by the pump (120) through the throttle, (130, 230) wherein the throttle, through which the liquid medium flow, is an overflow valve (130, 230) placed at an outlet of the pump (120, 220), whereby the overflow valve (130, 230) is connected to at least one heating press plate (140, 240) or a unit of heating press plates using at least one low-pressure feeding line (131, 231) and the overflow valve (230) has at least one additional terminal to which, by means of a control pipe (232), is connected a distribution valve (270) switchable into three positions: '0', 'a', and 'b', whereas in the '0' position, the overflow valve (230) is a usual valve with a preset working pressure set by a valve spring, whereas in the 'a' position, the overflow valve (230) is a valve operating at a reduced working pressure set by the control throttle (280) and whereas in the 'b' position, the overflow valve (230) is a valve that operates in a fully opened state and allows overflowing of the liquid medium without throttling the flow of the liquid medium.

2. The heating unit for heating press plates of a vulcanizing press machine according to claim 1, wherein the outlet of the heating press plate (140, 240) or the unit of heating press plates is connected to a cooler (160).

3. A method for heating press plates of a vulcanizing press machine using a liquid medium flowing through ducts in the heating press plates or in the unit of heating press plates whereby the liquid medium is heated by heat emitted during flow of the liquid medium forced by a pump through a throttle, wherein the throttle is shaped as an overflow valve which is placed at an outlet of the pump, whereby from throttle, by means of at least one low-pressure feeding line, the liquid medium is directed into the ducts of the press plates or the unit of press plates, and an operation state of the overflow valve is preset by a distribution valve switchable between three positions: '0', 'a', and 'b', whereas in the '0' position, the overflow valve is switched to operate at pressure preset by a valve spring, in the 'a' position, the overflow valve is switched to operate at a reduced pressure as preset by a control throttle, and, in the 'b' position, the overflow valve is switched to operate in a fully opened state and allows overflowing of the liquid medium without throttling the flow of the liquid medium.

4. The method for heating press plates of a vulcanizing press machine according to claim 3, wherein the liquid medium is cooled down in a cooler after it leaves the press plates or the unit of press plates.

## Patentansprüche

1. Ein Heizgerät zur Erhitzung von Druckplatten einer Vulkanisierpresse mit Heizdruckplatten, erhitzt mittels flüssigen Heizmediums, das durch interne Leitungen der Heizdruckplatten fließt, die über eine Versorgungsleitung und Pumpe (120) mit einem Behälter (110) und Rücklaufleitung verbunden sind, welche den Heizplattenauslauf mit dem Behälter verbindet, wobei in der Vorlaufleitung (131) ein Drosselventil vorhanden ist, wobei das flüssige Heizmedium durchströmt das Drosselventil auf dem Weg vom Behälter zur Heizdruckplatte, und wobei das flüssige Heizmedium wird erhitzt durch die während des durch die Pumpe (120) erzwungenen Durchflusses durch das Drosselventil (130, 230) ausgestrahlte Wärme, **dadurch gekennzeichnet, dass** das durchströmte Drosselventil ein Überlaufventil (130, 230) ist und sich am Auslauf der Pumpe (120, 220) befindet, wobei das Überlaufventil (130, 230) mit mindestens einer Heizdruckplatte (140, 240) oder einer Heizdruckplattengruppe verbunden ist und mindestens eine Niederdruck-Vorlaufleitung benutzt, wobei das Überlaufventil (230) verfügt auch über mindestens ein Zusatzendstück, mit welchem über eine Steuerrohrleitung (232) das Verteilungsventil (270) mit drei Schaltpositionen: '0', 'a' i 'b' verbunden ist, wobei in der Stellung '0' das Überlaufventil (230) ein normales Ventil mit einem vorgegebenen über eine Feder eingestellten Betriebsdruck ist, wobei in der Stellung 'a' das Überlaufventil (230) bei vermindertem Betriebsdruck arbeitet, der am Steuerdrosselventil (280) eingestellt wird, während in der Stellung 'b' das Überlaufventil (230) vollständig geöffnet ist und einen ungedrosselten Durchfluss des flüssigen Heizmediums ermöglicht.

2. Das Heizgerät zur Erhitzung von Druckplatten einer Vulkanisierpresse mit Heizdruckplatten nach Anspruch 1, **dadurch gekennzeichnet, dass** der Auslauf der Heizdruckplatte (140, 240) oder Heizdruckplattengruppe mit einem Kühler verbunden ist (160).

3. Ein Verfahren für Erhitzung der Druckplatten der Vulkanisierpresse mittels flüssigen Heizmediums, das die Leitungen der Heizdruckplatten oder Heizdruckplattengruppe durchströmt, wobei das flüssige Heizmedium durch die beim durch eine Pumpe erzwungenen Durchfluss des Mediums durch ein Drosselventil ausgestrahlte Wärme erhitzt wird, **dadurch gekennzeichnet, dass** das als ein Überlaufventil ausgebildete Drosselventil befindet sich am Auslauf der Pumpe, wobei vom Drosselventil durch mindestens eine Niederdruck-Vorlauflinie das flüssige Heizmedium zu den Leitungen der Druckplatten gefördert wird und der Betriebszustand des Überlaufventils an einem Verteilungsventil mit drei Schaltpositionen: '0', 'a' i 'b' vorgegeben ist, wobei in der Stellung '0' das Überlaufventil durch eine Feder zum Betrieb mit einem vorgegebenen Druck, in der Stellung 'a' das Überlaufventil zum Betrieb mit einem reduzierten am Drosselventil eingestellten Druck eingestellt ist und in Stellung 'b' das Drosselventil vollständig geöffnet ist und einen ungedrosselten Durchfluss des flüssigen Heizmediums ermöglicht.

4. Das Verfahren für Erhitzung der Druckplatten der Vulkanisierpresse nach Anspruch 3, **dadurch gekennzeichnet, dass** das flüssige Heizmedium im Kühler gekühlt wird, nachdem es die Druckplatten oder Druckplattengruppe verlasst.

## Revendications

1. Un dispositif de chauffage des plateaux de serrage de la presse à vulcaniser équipée de plateaux chauffants de serrage chauffés avec agent de chauffage liquide circulant dans les canalisations intégrées audits plateaux de serrage, ces canalisations étant raccordées, via une ligne d'alimentation, à une pompe (120) avec réservoir (110) et à une ligne de retour qui relie la sortie au niveau des plateaux de serrage avec le réservoir, ladite canalisation d'alimentation (131) étant équipée d'une vanne d'étranglement par laquelle l'agent de chauffage liquide circule depuis le réservoir jusqu'au plateau de serrage chauffé, et l'agent de chauffage liquide est chauffé avec la chaleur qui est émise lors du passage de l'agent liquide, forcé par la pompe (120), par la vanne d'étranglement (130, 230), ladite vanne d'étranglement traversée par l'agent liquide étant une soupape de trop-plein (130, 230) positionnée à la sortie de la pompe (120, 220), cette soupape de trop-plein (130, 230) étant raccordée sur au moins un plateau de serrage chauffé (140, 240) ou sur un groupe de plateaux de serrage chauffés, avec l'utilisation d'au moins une ligne d'alimentation basse pression (131, 231), et la soupape de trop-plein (230) étant équipée d'au moins un embout complémentaire sur lequel, à l'aide d'une canalisation de commande (232), est raccordée la vanne de répartition (270) à trois positions de liaison: '0', 'a' et 'b', sachant que dans la position '0', la soupape de trop-plein (230) est une vanne ordinaire à la pression de service consignée, réglée avec ressort de vanne, tandis qu'en position 'a' ladite soupape de trop-plein (230) est une vanne qui fonctionne à une pression de travail réduite, réglée sur la vanne de commande d'étranglement (280), et en position 'b' la soupape de trop-plein (230) est une vanne qui fonctionne à ouverture pleine et permet à l'agent liquide de circuler sans l'étrangler.

2. Le dispositif de chauffage des plateaux de serrage de la presse à vulcaniser selon la revendication 1, **caractérisé en ce que** la sortie du plateau de serrage chauffé (140, 240) ou du groupe de plateaux de serrage chauffés est raccordée au refroidisseur (160).

3. Une méthode de chauffage des plateaux de serrage de la presse à vulcaniser avec agent liquide circulant dans les canalisations intégrées aux plateaux de serrage chauffés ou au groupe de plateaux de serrage chauffés, ledit agent étant chauffé avec chaleur émise lors du passage de l'agent liquide, sous l'effet de la pompe, par la vanne d'étranglement qui a une forme d'une soupape de trop-plein positionnée à la sortie de la pompe, depuis ladite vanne d'étranglement l'agent liquide étant dirigé, avec au minimum une ligne d'alimentation basse pression, vers les canalisations intégrées aux plateaux de serrage et l'état de service de la soupape de trop-plein est sélectionné sur la vanne de répartition à trois positions de liaison: '0', 'a' et 'b', sachant que dans la position '0' la soupape de trop-plein est basculée en fonctionnement à la pression consignée réglée avec ressort de la vanne, dans la position 'a' la soupape de trop-plein est basculée en fonctionnement à une pression réduite telle que réglée sur la vanne de commande d'étranglement, et dans la position 'b' la soupape de trop-plein est basculée en fonctionnement à ouverture pleine en permettant à l'agent liquide de s'écouler librement sans l'étrangler.

4. La méthode de chauffage des plateaux de serrage de la presse à vulcaniser selon la revendication 3, **caractérisé en ce que** l'agent liquide est refroidi dans le refroidisseur, une fois sorti des plateaux de serrage ou du groupe de plateaux de serrage.
